# EUROPEAN PATENT SPECIFICATION

(11) **EP 3 118 240 B1**
(45) Date of publication and mention of the grant of the patent: **23.05.2018**
(21) Application number: 15460081.1
(22) Date of filing: 24.09.2015
(51) Int. Cl.: C08G 71/04

(54) **METHOD OF PREPARATION OF NON-ISOCYANATE POLYHYDROXYURETHANES AND METHOD OF PREPARATION NON-ISOCYANATE POLYHYDROXYURETHANE-EPOXIDES**
VERFAHREN ZUR HERSTELLUNG VON NICHT-ISOCYANAT-POLYHYDROXYURETHANEN UND VERFAHREN ZUR HERSTELLUNG VON NICHT-ISOCYANAT-POLYHYDROXYURETHAN-EPOXIDEN
PROCÉDÉ DE PRÉPARATION DE POLYHYDROXYURÉTHANES SANS ISOCYANATE ET PROCÉDÉ DE PRÉPARATION D'ÉPOXIDES DE POLYHYDROXYURÉTHANE SANS ISOCYANATE

(30) Priority: 14.07.2015 PL 41311815
(43) Date of publication of application: 18.01.2017
(73) Proprietor: Politechnika Gdanska, 80-233 Gdansk (PL)
(72) Inventor: Wloch, Marcin, 80-340 Gdansk (PL); Datta, Janusz, 81-650 Gdynia (PL)

(56) References cited:
- CN-B- 103 360 593
- US-A1- 2014 378 648

## Description

### Technical field

Disclosed is a method of preparation of non-isocyanate polyhydroxyurethanes and a method of preparation non-isocyanate polyhydroxyurethane-epoxides. The present invention is useful in obtaining materials applied as construction plastics.

### Background of the invention

Polyurethanes are produced on industrial scale in the reaction of polyols, especially polyestrols or polyetherols, with diisocyanates and low molecular weight chain extenders.

Disadvantages of diisocyanates using is its high moisture sensitivity, high price and toxicity for natural environment and human. Especially moisture sensitivity significantly influences on reaction conditions of polyurethane synthesis and quality of obtained product. Mentioned facts resulted in looking for methods of polyurethanes synthesis by non-isocyanate route.

It is known that non-isocyanate polyurethanes can be synthesized from compounds, which contain cyclic carbonate groups in the structure, and primary diamines. Obtained by this way polyurethanes, also called polyhydroxyurethanes, contain hydroxyl groups in macromolecules chains. It is known that intermediates with cyclic carbonate groups in the structure can be obtained by reaction of epoxy compounds with carbon dioxide in the presence of a catalyst, under higher temperature and pressure.

Patent US 7045577 describes synthesis of non-isocyanate polyurethanes by two-step method. In the first step intermediate is obtained by reaction of epoxidized soybean oil and carbon dioxide in the presence tetrabutylammonium bromide as a catalyst. The reaction is realized under elevated pressure, at temperature equal 110°C for 70 hours. In the second step, obtained chemically modified soybean oil, which contains in the structure cyclic carbonate groups is reacted with amines, i.e. 1,2-ethanediamine, 1,6-hexanediamine or tris(2-aminoethyl)amine.

Patent US 20120208967 describes synthesis of non-isocyanate polyurethanes by two-step method. In the first step intermediate is obtained by reaction of epoxidized soybean oil and carbon dioxide in the presence of tetrabutylammonium bromide as a catalyst. Reaction is realized under pressure equal 1MPa, at temperature 120°C for 40 hours. In the second step, obtained chemically modified soybean oil, which contains in the structure cyclic carbonate groups is reacted with amines, i.e. 1,8-diamino-3,6-dioxaoctane or isophoronediamine.

Patent CN 101812175 describes synthesis of non-isocyanate polyurethanes by two-step method. In the first step intermediate is obtained by reaction of diglycidylether of diol with carbon dioxide in the presence of catalyst mixture i.e. zirconium carbonate and 1-butyl-2-methylimidazolitim chloride. Reaction is realized under the pressure equal 2MPa, at 150°C for 10 hours. Obtained biscyclic carbonate is reacted with tetraethylenepentamine.

Patent CN 103013323 describes synthesis of non-isocyanate polyurethanes by two-step method. In the first step epoxy resin is reacted with carbon dioxide under pressure equal 1.5 MPa with using tetrbutylammonium bromide as a catalyst. Reaction is realized at 115°C - 120°C for 6 - 9 hours, what resulted in conversion of epoxy groups equal 41% - 55%.

Document US 2014/378648 A1 describes a method for preparing a compound comprising at least one β-hydroxy-urethane unit and/or at least one γ-hydroxy-urethane unit, consisting in reacting a compound comprising at least one cyclocarbonate group with a compound comprising at least one amino groups in the presence of a catalyst. Reaction is performed at the temperature below 170°C (usually below 100°C) using catalyst, which is at least one organometallic complex and a co-catalyst chosen from the group of Lewis bases and/or tetra-alkyl ammonium salts.

### Summary of the invention

The disadvantages of synthesis methods of non-isocyanate polyurethanes is necessity of using carbon dioxide connected with higher pressure and temperature. Final products obtained by non-isocyanate method possess better chemical properties, particularly exhibited of chemical resistance on especially bases, acids and solvents. That is reason why method without above mentioned disadvantages, should be developed.

The method presented in this invention, is not required of carbon dioxide and high pressure, so using of special chemical apparatus is not needed.

Glycerol carbonate, which is used as substrate, can be obtained from natural resources. When epoxidized vegetable oil is used, the method presented in this invention is an environmental friendly and ecological method.

The present invention is defined in the claims and it is explained in more details by referring to examples.

### Example 1. Method of polyhydroxyurethanes synthesis

A glass flask was charge with: 180 grams of epoxy resin i.e. diglycidyl ether of bisphenol A with epoxy number equal 0.548 mol/100g; 250 grams of glycerol carbonate and 1 gram of 95 wt% sulphuric acid. At first, reaction mixture is heated to 110°C and this temperature is maintained to the end of reaction. Reaction is realized in the atmosphere of inert gas, under continuous stirring to obtain full conversion of epoxy groups. The conversion of epoxy groups is monitored by determination of epoxy number by titration method and by spectroscopic analysis with using Fourier Transform Infrared Spectroscopy. The excess of glycerol carbonate is removed by vacuum distillation.

In the next step obtained semi-product is cooled to the room temperature. Obtained intermediate is a biscyclic carbonated, which contains in the structure two cyclic carbonate groups. Prepared by this way bis(cyclic carbonate) in the amount of 60.1g is reacted with 14.6g of triethylenetetramine. The reaction is carried out at room temperature.

Obtained polyhydroxyurethane-epoxide is seasoned for 24 hours at temperature 100°C.

Obtained polyhydroxyurethane exhibits tensile strength equal around 41 MPa and elongation at break around 18%. Chemical structure of prepared polyhydroxyurethane was determined by Fourier-Transform Infrared Spectrosciopy with using Nicolet 8700 spectrophotometer (Thermo Electron Corporation).

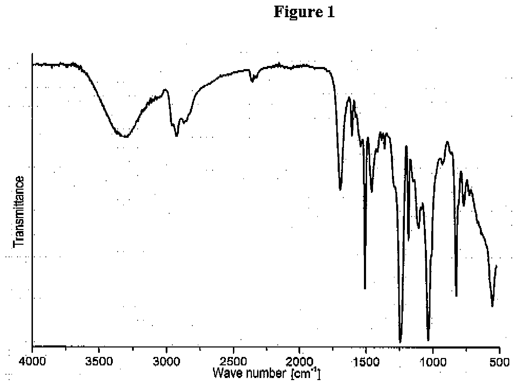

The spectrum was registered between 500 cm-1 and 4500 cm-1, with the resolution of 4 cm-1, and was shown in **Figure 1****.**

### Example 2. Method of polyhydroxyurethane-epoxides synthesis

A glass flask was charge with: 180 grams of epoxy resin i.e. diglycidyl ether of bisphenol A with epoxy number equal 0.548 mol/100g; 250 grams of glycerol carbonate and 1 gram of 84 wt% ortophosphoric acid. At first, reaction mixture is heated to 110°C and this temperature is maintained to the end of the reaction. Process is realized in the atmosphere of inert gas, under continuous stirring for 10 hours, what permit to obtain around 58% conversion of epoxy groups. The conversion of epoxy groups is monitored in time intervals of 30 minutes, by determination of epoxy number by titration method.

The excess of glycerol carbonate is removed by vacuum distillation. Obtained semi-product, is a yellow-pale liquid, and contains mixture of compounds, which contains in the structure at least one of cyclic carbonate group or at least one of epoxy group. In the next, 50 g of obtained by this way intermediate is reacted with 14.6g of triethylenetetramine at room temperature.

Obtained polyhydroxyurethane-epoxide is seasoned for 24 hours at temperature 100°C.

Obtained polyhydroxyurethane-epoxide exhibits tensile strength 37.4 ± 4.8 MPa and elongation at break around 6.2 ± 0.6%.

### Example 3. Method of polyhydroxyurethane-epoxides synthesis

At first, the reaction is realized as was described in Example 1. In the next, 60.1 grams of bis(cyclic carbonate) is mixed with 36.5 grams of epoxy resin i.e. diglycidyl ether of bisphenol A with epoxy number equal 0.548 mol/100g. In the next step prepared mixture is reacted with 17.6 grams of triethylenetetramine. The reaction is realized under atmospheric pressure without using a catalyst. The reaction time depends on type of used amine.

Obtained polyhydroxyurethane-epoxide is seasoned for 24 hours at temperature 100°C.

Obtained polyhydroxyurethane-epoxide exhibits tensile strength 30.48 ± 5.0 MPa and elongation at break around 5.33 ± 1.5%.

## Claims

1. A process for producing a polyhydroxyurethane comprising; in the first step, synthesis of semi-product in the presence of a catalyst, and this semi-product contains in the structure cyclic carbonate groups; and in the next step obtained semi-product is reacted with amines, **characterized in that** in the first step epoxy resin is reacted with glycerol carbonate, wherein reaction of said reactants comprise reaction of 1 mol of epoxy groups with at least 1 mol of cyclic carbonate groups, wherein the first step is realized in temperature range from 60 do 120°C in atmosphere of inert gas to the full conversion of epoxy groups, and after that the excess of glycerol carbonate is removed by vacuum distillation and obtained semi-product, which contains in the chemical structure two cyclic carbonate groups, is cooled to room temperature, while in the second step, prepared semi-product is reacted with polyamines, what permit to obtain polyhydroxyurethane, which is further seasoned for at least 24 hours at temperature from 80 to 120°C.

2. A process according to claim 1, **characterized in that**, the said catalyst is 84wt% - 86wt% orthophosphoric acid or at least 95wt% sulphuric acid in the amount from 0.2wt% do 2wt% of reaction mixture.

3. A process according to claim 1. **characterized in that**, in the second step the prepared semi-product is reacted with diamines.

4. A process according to claim 1, **characterized in that** for 1 mol of epoxy resin, the cyclic carbonate groups are used in the range from 2 to 8 mol.

5. A process for producing a polyhydroxyurethane-epoxides comprising: in the first step, synthesis of semi-product in the presence of a catalyst, and this semi-product contains in the structure cyclic carbonate groups and epoxy groups; and in the next step obtained semi-product is reacted with amines, **characterized in that**, in the first step epoxy resin is reacted with glycerol carbonate, wherein reaction of said reactants comprise reaction of 1 mol of epoxy groups with at least 1 mol of cyclic carbonate groups, wherein the first step is realized in temperature range from 60 do 120°C in atmosphere of inert gas, to obtain conversion of epoxy groups equal from 20 to 80%, after that the excess of glycerol carbonate is removed by vacuum distillation and obtained semi-product, which contains in the structure at least one epoxy group and/or at least one cyclic carbonate group, is cooled to room temperature, while in the second step, prepared semi-product is reacted with polyamines, what permit to obtain polyhydroxyurethane, which is further seasoned for at least 24 hours at temperature from 80 to 120°C.

6. A process according to claim 5, **characterized in that**, said catalyst is 84wt% - 86wt% orthophosphoric acid or at least 95wt% sulphuric acid in the amount from 0.2wt% do 2wt% of reaction mixture.

7. A process according to claim 5, **characterized in that**, in the second step the prepared semi-product is reacted with diamines.

8. A process according to claim 5. **characterized in that** for 1 mol of epoxy resin, 2 mol of cyclic carbonate groups are used.

9. A process for producing a polyhydroxyurethane-epoxides comprising: in the first step, synthesis of semi-product in the presence of a catalyst, and this semi-product contains in the structure cyclic carbonate groups; and in the next step obtained semi-product is reacted with amines, **characterized in that**, in the first step epoxy resin is reacted with glycerol carbonate, wherein reaction of said reactants comprise reaction of 1 mol of epoxy groups with at least 1 mol of cyclic carbonate groups, wherein the first step is realized in temperature range from 60 do 120°C in atmosphere of inert gas to the full conversion of epoxy groups, after that the excess of glycerol carbonate is removed by vacuum distillation. Obtained semi-product, which contains in the structure two cyclic carbonate groups, is cooled to room temperature, while in the second step, prepared semi-product is mixed with epoxy resin or epoxidized soybean oil, to obtain at least 10wt.% concentration of epoxy compound in the mixture, after that, obtained mixture is reacted with polyamines, what permit to obtain polyhydroxyurethane-epoxide, which is further seasoned for at least 24 hours at temperature from 80 to 120°C.

10. A process according to claim 9, wherein said catalyst is 84wt% - 86wt% orthophosphoric acid or at least 95wt% sulphuric acid in the amount from 0.2wt% do 2wt% of reaction mixture.

11. A process according to claim 9, **characterized in that**, in the second step the prepared semi-product is reacted with diamines.

12. A process according to claim 9, **characterized in that**, for 1 mol of epoxy resin, the cyclic carbonate groups are used in the range from 2 to 8 mol.

## Patentansprüche

1. Verfahren zur Herstellung eines Polyhydroxyurethans, umfassend: im ersten Schritt, Synthese eines Halbprodukts in Gegenwart eines Katalysators, welches Halbprodukt in seiner Struktur cyclische Carbonatgruppen und Epoxygruppen enthält; und in der nächsten Stufe so erhaltenes Halbprodukt mit Aminen umgesetzt wird, **dadurch gekennzeichnet, dass** in der ersten Stufe Epoxidharz mit Glycerincarbonat umgesetzt wird, wobei die Umsetzung der genannten Reaktionspartner die Umsetzung von 1 mol Epoxidgruppen mit mindestens 1 mol cyclischen Carbonatgruppen umfasst, wobei der erste Schritt im Temperaturbereich von 60 bis 120°C in Inertgasatmosphäre bis zur vollständigen Umsetzung von Epoxygruppen durchgerührt wird, und danach der Überschuss an Glycerincarbonat durch Vakuumdestillation entfernt wird und das Halbprodukt erhalten wird, welches in der chemischen Struktur zwei cyclische Carbonatgruppen enthält und auf Raumtemperatur abgekühlt wird, während in der zweiten Stufe so hergestelltes Halbprodukt mit Polyaminen umgesetzt wird, was es ermöglicht, Polyhydroxyurethan zu erhalten, welches für mindestens 24 Stunden bei einer Temperatur von 80 bis 120°C temperiert werden soll.

2. Verfahren nach Anspruch 1, **dadurch gekennzeichnet, dass** der Katalysator 84 Gew.-% - 86 Gew.-% Orthophosphorsäure oder mindestens 95% Schwefelsäure in einer Menge von 0,2 Gew.-% bis 2 Gew.-% der Reaktionsmischung enthält,

3. Verfahren nach Anspruch 1, **dadurch gekennzeichnet, dass** in dem zweiten Schritt das hergestellte Halbprodukt mit Diaminen umgesetzt wird.

4. Verfahren gemäß Anspruch 1, **dadurch gekennzeichnet, dass** für 1 mol Epoxidharz die cyclischen Carbonatgruppen im Bereich von 2 bis 8 mol eingesetzt werden.

5. Verfahren zur Herstellung von Polyhydroxyurethanenepoxiden, umfassend: im ersten Schritt, Synthese von Halbprodukten in Gegenwart eines Katalysators, und dieses Halbprodukt enthält in der Struktur cyclische Carbonatgruppen und Epoxygruppen; und in der nächsten Stufe so erhaltenes Halbprodukt mit Aminen umgesetzt wird, **dadurch gekennzeichnet, dass** in der ersten Stufe Epoxidharz mit Glycerincarbonat umgesetzt wird, wobei die Umsetzung der genannten Reaktionspartner die Umsetzung von 1 mol Epoxidgruppen mit mindestens 1 mol cyclischen Carbonatgruppen umfasst, wobei der erste Schritt im Temperaturbereich von 60 bis 120 °C in Inertgasatmosphäre durchgeführt wird, um eine Umsetzung von Epoxygruppen im Bereich von 20 bis 80% zu bekommen, danach wird der Überschuss an Glycerincarbonat durch Vakuumdestillation entfernt und das erhaltene Halbprodukt, welches in der Struktur mindestens eine Epoxygruppe und / oder mindestens eine cyclische Carbonatgruppe enthält, auf Raumtemperatur abgekühlt wird, während im zweiten Schritt das so hergestellte Halbprodukt mit Polyaminen zu Polyhydroxyurethan umgesetzt wird, das welches mindestens 24 Stunden bei einer Temperatur von 80 bis 120 ° C weiter temperiert wird.

6. Verfahren nach Anspruch 5, **dadurch gekennzeichnet, dass** der Katalysator 84 Gew.-% - 86 Gew.-% Orthophosphorsäure oder mindestens 95 Gew.-% Schwefelsäure in einer Menge von 0,2 Gew.-% bis 2 Gew.-% der Reaktionsmischung enthält.

7. Verfahren nach Anspruch 5, **dadurch gekennzeichnet, dass** in der zweiten Stufe das hergestellte Halbprodukt mit Diaminen umgesetzt wird.

8. Verfahren gemäß Anspruch 5, **dadurch gekennzeichnet, dass** für 1 mol Epoxidharz 2 mol cyclische Carbonatgruppen eingesetzt werden.

9. Verfahren zur Herstellung von Polyhydroxyurethan-Epoxiden, umfassend; in der ersten Stufe ein Halbprodukt enthaltend in seiner Struktur cyclische Carbonatgruppen und Epoxygruppen erhalten wird; welches weiter mit Aminen umgesetzt wird, **dadurch gekennzeichnet, dass** in der ersten Stufe Epoxidharz mit Glycerincarbonat reagiert, wobei die Reaktion umfasst volle Umsetzung vom 1 mol Epoxygruppen mit zumindest 1 mol cyclischen Carbonatgruppen, in der ersten Stufe in der Temperatur von 60 bis 120°C und in Inertgasatmosphäre und nach der Umwandlung und der Enfernung by Destillation des Überschusses des Glycerincarbonats ein Halbprodukt erhalten wird, welches in der Struktur zwei cyclische Carbonatgruppen enthält und welches die in der zweiten Stufe mit Epoxidharz, epoxidiertem Sojabohnenöl, gemischt word, um mindestens 10 Gew .-% von Epoxidverbindung in der Mischung zu erhalten und danach die erhaltene Mischung mit Polyaminen umgesetzt wird, was ermöglicht es, Polyhydroxyurethane-Epoxid zu erhalten, welches mindestens 24 Stunden bei einer Temperatur von 80 bis 120°C temperiert werden soll.

10. Verfahren nach Anspruch 9, **dadurch gekennzeichnet, dass** der Katalysator 84 Gew.-% - 86 Gew.-% Orthophosphorsäure oder mindestens 95 Gew.-% Schwefelsäure in einer Menge von 0,2 Gew.-% bis 2 Gew.-% der Reaktionsmischung enthält.

11. Verfahren nach Anspruch 9, **dadurch gekennzeichnet, dass** in der zweiten Stufe das hergestellte Halbprodukt mit Diaminen umgesetzt wird.

12. Verfahren nach Anspruch 9, **dadurch gekennzeichnet, dass** für 1 Mol Epoxidharz die cyclischen Carbonatgruppen im Bereich von 2 bis 8 Mol eingesetzt werden.

## Revendications

1. Procédé de production d'un polyhydroxyuréthane comprenant: dans la première étape, la synthèse du semi-produit en présence d'un catalyseur et ce semi-produit contient dans sa structure des groupes carbonates cycliques et des groupes épox et dans l'étape suivante, le semi-produit obtenu réagit avec des amines, **caractérisée en ce que** dans la première étape la résine époxy réagit avec du carbonate de glycérol dont les desdits réactifs comprennent une réaction de 1 mole de groupes époxy avec au moins 1 mole des groupes carbonates cycliques dont la première étape est obtenue sous une plage de température entre 60 à 120 °C, dans une atmosphère de gaz inerte jusqu'à la conversion complète des groupes époxy et après cela, l'excès de carbonate de glycérol est éliminé par distillation sous vide et le semi-produit obtenu, qui contient dans sa structure chimique deux groupes carbonates cycliques, est refroidi à température ambiante tandis que dans la deuxième étape, le demi-produit préparé réagit avec des polyamines, ce qui permet d'obtenir du polyhydroxyuréthane, qui est séché pendant au moins 24 heures à une température de 80 à 120°C.

2. Procédé selon la revendication 1, **caractérisé en ce que** ledit catalyseur est une solution d'acide orthophosphorique comprise entre 84% en poids - 86% en poids ou au moins une solution avec 95% d'acide sulfurique en une quantité comprise entre 0,2% en poids - 2% en poids du mélange réactionnel.

3. Procédé selon la revendication 1, **caractérisé en ce que**, dans la seconde étape, le semi-produit préparé réagit avec des diamines.

4. Procédé selon la revendication 1, **caractérisé en ce que** pour 1 mole de résine époxy, les groupes carbonates cycliques soient utilisés dans une fourchette de 2 à 8 moles.

5. Procédé de production de polyhydroxyuréthane-époxydes comprenant: dans une première étape, la synthèse d'un semi-produit en présence d'un catalyseur et ce semi-produit contient dans sa structure des groupes carbonates cycliques et des groupes époxy et dans l'étape suivante, le semi-produit obtenu réagit avec des amines, **caractérisé en ce que** dans la première étape la résine époxy réagit avec du carbonate de glycérol dont les desdits réactifs comprenant une réaction de 1 mole de groupes époxy avec au moins 1 mole de groupe carbonate cyclique dont la première étape est obtenue sous une plage de température entre 60 à 120 °C dans une atmosphère de gaz inerte, pour obtenir un taux de groupes époxy entre 20 à 80% après cela, l'excès de carbonate de glycérol est éliminé par distillation sous vide et le semi-produit obtenu, qui contient dans sa structure au moins un groupe époxy et / ou au moins un groupe carbonate cyclique, est refroidi à température ambiante tandis que dans la seconde étape, le semi-produit préparé réagit avec des polyamines, ce qui permet d'obtenir du polyhydroxyuréthane, qui est ensuite séché pendant au moins 24 heures à une température entre 80 à 120°C.

6. Procédé selon la revendication 5, **caractérisé en ce que** ledit catalyseur est une solution d'acide orthophosphorique comprise entre 84% en poids - 86% en poids ou au moins une solution avec 95% d'acide sulfurique en une quantité comprise entre 0,2% en poids - 2% en poids du mélange réactionnel.

7. Procédé selon la revendication 5, **caractérisé en ce que**, dans la seconde étape, le semi-produit préparé réagit avec des diamines.

8. Procédé selon la revendication 5, **caractérisé en ce que** pour 1 mole de résine époxy, 2 moles du groupe carbonate cyclique soient utilisées.

9. Procédé de production de polyhydroxyuréthane-époxydes comprenant: dans une première étape, la synthèse d'un semi-produit en présence d'un catalyseur et ce semi-produit contient dans sa structure des groupes carbonates cycliques et des groupes époxy et dans l'étape suivante, le semi-produit obtenu réagit avec des amines, **caractérisé en ce que** dans la première étape la résine époxy réagit avec du carbonate de glycérol dont les desdits réactifs comprenant une réaction de 1 mole de groupes époxy avec au moins 1 mole du groupe carbonate cyclique dont la réalisation de la première étape est obtenue sous une plage de température entre 60 à 120°C dans une atmosphère de gaz inerte, jusqu'à la conversion totale des groupes époxy et après cela, l'excès de carbonate de glycérol est éliminé par distillation sous vide et le semi-produit obtenu, qui contient dans sa structure deux groupes carbonates cycliques, est refroidi à température ambiante tandis que dans la deuxième étape, le semi-produit préparé est mélangé avec de la résine époxy ou de l'huile de soja époxydée, pour obtenir au moins 10% en poids de composé époxy dans le mélange, après cela, le mélange obtenu réagit ensuite avec des polyamines, ce qui permet d'obtenir un polyhydroxyuréthane-époxyde qui est séché pendant au moins 24 heures à une température de 80 à 120°C.

10. Procédé selon la revendication 9, dans lequel ledit catalyseur est une solution d'acide orthophosphorique comprise entre 84% en poids - 86% en poids ou au moins une solution avec 95% d'acide sulfurique en une quantité comprise entre 0,2% en poids - 2% en poids du mélange réactionnel.

11. Procédé selon la revendication 9, **caractérisé en ce que**, dans la seconde étape, le semi-produit préparé réagit avec des diamines.

12. Procédé selon la revendication 9, **caractérisé en ce que** pour 1 mole de résine époxy, les groupes carbonates cycliques soient utilisés dans une fourchette de 2 à 8 moles.
